(19) Europäisches Patentamt
European Patent Office
Office européen des brevets

(11) **EP 3 212 971 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **15787568.3**

(22) Anmeldetag: **28.10.2015**

(51) Int Cl.:
***F16H 59/72*** *(2006.01)*    ***F16H 57/04*** *(2010.01)*

(86) Internationale Anmeldenummer:
**PCT/EP2015/074996**

(87) Internationale Veröffentlichungsnummer:
**WO 2016/066692 (06.05.2016 Gazette 2016/18)**

(54) **VERFAHREN ZUM ERMITTELN EINER TEMPERATUR IM ÖLRAUM EINER GETRIEBEEINRICHTUNG SOWIE ENTSPRECHENDE GETRIEBEEINRICHTUNG**

METHOD FOR DETERMINING A TEMPERATURE IN AN OIL CHAMBER OF A TRANSMISSION DEVICE, AND CORRESPONDING TRANSMISSION DEVICE

PROCÉDÉ POUR LA DÉTERMINATION D'UNE TEMPÉRATURE D'UN CARTER D'HUILE D'UN DISPOSITIF DE TRANSMISSION ET DISPOSITIF DE TRANSMISSION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2014 DE 102014016075**

(43) Veröffentlichungstag der Anmeldung:
**06.09.2017 Patentblatt 2017/36**

(73) Patentinhaber: **Audi AG**
**85045 Ingolstadt (DE)**

(72) Erfinder:
• **AMMLER, Stefan**
**86673 Bergheim (DE)**
• **BAUER, Florian**
**85051 Ingolstadt (DE)**

(74) Vertreter: **Lehle, Josef**
**AUDI AG**
**Patentabteilung**
**85045 Ingolstadt (DE)**

(56) Entgegenhaltungen:
DE-A1- 3 108 242       DE-A1- 10 043 423
DE-A1-102011 085 750

**Beschreibung**

Die Erfindung betrifft ein Verfahren zum Ermitteln der Temperatur in einem Ölraum einer Getriebeeinrichtung, wobei in dem Ölraum ein Radsatz der Getriebeeinrichtung angeordnet ist. Die Erfindung betrifft weiterhin eine Getriebeeinrichtung.

Die Getriebeeinrichtung ist beispielsweise einem Kraftfahrzeug zugeordnet beziehungsweise ein Bestandteil des Kraftfahrzeugs. Sie ist insoweit mit einer Antriebseinrichtung wirkverbunden, von welcher ihr an einer Eingangswelle ein Drehmoment zur Verfügung gestellt werden kann. Die Getriebeeinrichtung ist üblicherweise eine Schaltgetriebeeinrichtung, vorzugsweise eine automatische Schaltgetriebeeinrichtung. Sie ermöglicht insoweit das Einstellen einer von mehreren zur Verfügung stehenden Übersetzungen. Die Getriebeeinrichtung verfügt über den wenigstens einen Ölraum, in welchem der Radsatz der Getriebeeinrichtung angeordnet ist.

Der Radsatz weist dabei vorzugsweise wenigstens ein Zahnradgetriebe, insbesondere ein Stirnradgetriebe, ein Kegelradgetriebe und/oder ein Planetenradgetriebe auf. Vorzugsweise sind mehrere derartiger Zahnradgetriebe in dem Ölraum angeordnet. Dem Ölraum wird Schmiermittel beziehungsweise Öl zugeführt um zum einen den Radsatz zu schmieren und zum anderen Wärme aus dem Ölraum abzuführen. Die Wärme entsteht insbesondere durch Reibung innerhalb des Radsatzes. Beispielsweise verfügt der Ölraum über eine Trockensumpfschmierung, welche bevorzugt eine Schmiermittelpumpe beziehungsweise Ölpumpe aufweist.

Es ist wünschenswert, die Temperatur des Ölraums beziehungsweise die in dem Ölraum vorliegende Temperatur zu ermitteln, um auf Grundlage der Temperatur einen Bauteilschutz zu realisieren und/oder die Schmiermittelpumpe zu steuern und/oder zu regeln. Der Bauteilschutz betrifft insbesondere den Radsatz und/oder das Schmiermittel, welches sich unter Umständen bei Überschreiten einer bestimmten Maximaltemperatur zersetzt. Die Temperatur des Ölraums kann beispielsweise mithilfe eines Temperatursensors ermittelt werden. Dieser ist jedoch kostenaufwändig. Zudem kann bei einem Ausfall des Temperatursensors die Temperatur in dem Ölraum nicht mehr ermittelt werden.

Aus dem Stand der Technik ist beispielsweise die Druckschrift DE 100 43 423, die alle Merkmale des Oberbegriffs des Anspruchs 1 und des Anspruchs 10 offenbart, bekannt. Diese beschreibt ein Verfahren zur Erfassung der Temperatur des Öles im Sumpf eines Getriebes mit einem Temperatursensor und einer das Signal derselben auswertenden Steuerungselektronik. Dabei ist vorgesehen, dass der Temperatursensor im Gehäuse der Steuerungselektronik angeordnet ist, und dass das Gehäuse der Steuerungselektronik an einer Leitung angeordnet ist, die von dem durch eine Pumpe dem Sumpf entnommenen Öl durchströmt wird, wobei zwischen dem in der Leitung fließenden Öl und dem Gehäuse ein Wärmeübergang erfolgt, der vom Temperatursensor erfasst wird und ein Maß für die Temperatur des Öles im Sumpf darstellt.

Weiterhin zeigt die Druckschrift DE 31 08 242 A1 ein Verfahren zur kalorischen Messung der Verlustleistung eines Getriebes, bei dem bei konstanter mechanischer Belastung des Getriebes der dieser Belastung entsprechende Wärmeinhalt des Messsystems durch Wärmeisolierung zumindest des Getriebes und einer Wärmesenke in einem Kreislauf des die Verlustleistung abführenden Strömungsmediums konstant gehalten und die dabei von der Wärmesenke abzuführende Wärmeleistung ermittelt wird.

Dabei ist vorgesehen, dass der Wärmeinhalt des Messsystems unabhängig von der Belastung des Getriebes konstant gehalten wird.

Es ist Aufgabe der Erfindung, ein Verfahren zum Ermitteln der Temperatur in einem Ölraum einer Getriebeeinrichtung bzw. eine Getriebeeinrichtung zur Durchführung eines solchen Verfahrens vorzuschlagen, welche gegenüber dem Stand der Technik Vorteile aufweist, insbesondere eine kostengünstige Vorgehensweise zum Ermitteln der Temperatur in dem Ölraum bereitstellt. Dies wird erfindungsgemäß mit einem Verfahren mit den Merkmalen des Anspruchs 1 erreicht. Dabei ist vorgesehen, dass zum Ermitteln der Temperatur in dem Ölraum ein Gesamtenergieniveau für den Ölraum ermittelt wird, wobei ein Initialwert für das Gesamtenergieniveau bei einem Betriebsstart der Getriebeeinrichtung mit den folgenden Schritten bestimmt wird: Ermitteln einer normierten Abstellzeit als Funktion einer Außentemperatur sowie des Gesamtenergieniveaus, die bei einem dem Betriebsstart vorhergehenden Abstellen der Getriebeeinrichtung vorlagen, wobei die normierte Abstellzeit der Zeitspanne entspricht, nach deren Ablauf nach dem Abstellen die Temperatur des Ölraums sich der Außentemperatur angeglichen hat; Ermitteln einer korrigierten Abstellzeit als Funktion der normierten Abstellzeit und einer gemessenen Abstellzeit, wobei die gemessene Abstellzeit der mittels eines Zeitnehmers gemessenen Zeitspanne von dem Abstellen bis zu dem Betriebsstart entspricht; und Ermitteln des Initialwerts als Funktion der korrigierten Abstellzeit und der momentanen Außentemperatur.

Es soll also nicht unmittelbar die Temperatur in dem Ölraum modelliert werden, sondern vielmehr das gesamte Energieniveau. Aus diesem kann nachfolgend bei Bedarf die Temperatur bestimmt werden. Das Gesamtenergieniveau entspricht beispielsweise der inneren Energie in dem Ölraum und ist insoweit vorzugsweise proportional zu der Enthalpie.

Weil unmittelbar bei beziehungsweise nach einer Inbetriebnahme der Getriebeeinrichtung, also bei dem Betriebsstart, das gesamte Energieniveau noch nicht bekannt ist, wird zunächst ein Initialwert für das Gesamtenergieniveau ermittelt. Vorzugsweise wird bei dem Betriebsstart nach dem Ermitteln des Initialwerts das Gesamtenergieniveau gleich diesem Initialwert gesetzt. Der Initialwert wird aus verschiedenen Größen bestimmt, insbesondere liegt er als Funktion der Außentemperatur sowie des Gesamtenergieniveaus vor, die bei dem Abstellen der Getriebeeinrichtung vorlagen, der gemessenen Abstellzeit sowie der momentanen Außentemperatur vor. Die genannten Größen liegen insoweit als Eingangsgrößen vor, während der Initialwert als Ausgangsgröße aus der Berechnung resultiert.

Zunächst wird auf zwei Größen zurückgegriffen, die bei dem vorhergehenden, insbesondere dem unmittelbar vorhergehenden, Abstellen beziehungsweise Außerbetriebnehmen der Getriebeeinrichtung vorlagen, nämlich der Außentemperatur und dem Gesamtenergieniveau. Diese Größen werden bei dem Abstellen der Getriebeeinrichtung gespeichert, beispielsweise in einem Steuergerät, insbesondere in einem nichtflüchtigen Speicher, vorzugsweise in einem EEPROM oder einem Flashspeicher. Aus diesen Größen wird die normierte Abstellzeit ermittelt. Die normierte Abstellzeit ist dabei umso größer, je größer die gespeicherte Außentemperatur und je größer das gespeicherte Gesamtenergieniveau ist. Das Bestimmen der normierten Abstellzeit kann grundsätzlich auf beliebige Art und Weise geschehen, beispielsweise unter Verwendung einer mathematischen Beziehung, einer Tabelle und/oder eines Kennfelds.

Anschließend wird die korrigierte Abstellzeit aus der normierten Abstellzeit sowie der gemessenen Abstellzeit bestimmt. Insbesondere ergibt sich die korrigierte Abstellzeit aus einer Subtraktion der gemessenen Abstellzeit von der normierten Abstellzeit. Die gemessene Abstellzeit entspricht dabei der tatsächlichen, mittels eines Zeitmessers bestimmten Zeitspanne, von der Außerbetriebnahme der Getriebeeinrichtung bis zu dem erneuten Betriebsstart.

Unter der normierten Abstellzeit wird eine Zeitspanne verstanden, nach deren Ablauf nach dem Abstellen die Temperatur des Ölraums sich der Außentemperatur angeglichen hat. Bei einer bestimmten Außentemperatur stellt sich ohne weitere Energiezufuhr in Abhängigkeit von dem Gesamtenergieniveau beziehungsweise der Enthalpie ein Temperaturverlauf über der Zeit ein. Dieser Verlauf kann beispielsweise in Form einer Abkühlkurve dargestellt werden. Der Verlauf ist umso flacher, je geringer die Differenz zwischen der Außentemperatur und der Temperatur des Ölraums ist. Dabei wird angenommen, dass diese Temperatur proportional zum Gesamtenergieniveau ist. Somit kann jedem Gesamtenergieniveau die entsprechende normierte Abstellzeit zugeordnet werden, insbesondere in Abhängigkeit von der Außentemperatur, vorzugsweise derjenigen Außentemperatur, die beim Abstellen vorlag.

Anschließend wird der Initialwert aus der korrigierten Abstellzeit und der momentanen Außentemperatur bestimmt. Dies kann grundsätzlich auf beliebige Art und Weise geschehen, beispielsweise unter Verwendung einer mathematischen Beziehung, einer Tabelle und/oder eines Kennfelds. Die Funktion, die zum Ermitteln des Initialwerts aus der korrigierten Abstellzeit und der momentanen Außentemperatur herangezogen wird, ist beispielsweise die Umkehrfunktion derjenigen Funktion, die zum Ermitteln der normierten Abstellzeit aus der Außentemperatur und dem Gesamtenergieniveau herangezogen wird. Die normierte Abstellzeit beschreibt insoweit den Überschuss des Gesamtenergieniveaus in Abhängigkeit von der Außentemperatur bei dem Abstellen der Getriebeeinrichtung. Die korrigierte Abstellzeit ist analog hierzu der theoretische Überschuss des noch vorhandenen Gesamtenergieniveaus in Abhängigkeit von der momentanen Außentemperatur. Entsprechend kann aus dieser der Initialwert ermittelt werden.

Ausgehend von dem Initialwert kann nun beispielsweise eine Energiebilanzierung vorgenommen werden, damit das Gesamtenergieniveau während des Betriebs der Getriebeeinrichtung stets zumindest näherungsweise zum Bestimmen der Temperatur des Ölraums, beispielsweise der Temperatur in dem Ölraum, herangezogen werden kann.

In einer weiteren Ausgestaltung der Erfindung ist vorgesehen, dass bei dem Betriebsstart das Gesamtenergieniveau gleich dem Initialwert gesetzt wird. Auf eine derartige Ausgestaltung wurde vorstehend bereits eingegangen. Zunächst wird also bei dem Betriebsstart der Initialwert gemäß den vorstehenden Ausführungen bestimmt. Unmittelbar anschließend wird das Gesamtenergieniveau gleich diesem Initialwert gesetzt. Sollte der insgesamt erste Betriebsstart der Getriebeeinrichtung vorliegen, die gespeicherte Außentemperatur sowie das gespeicherte Gesamtenergieniveau mithin nicht gespeichert sein, so werden diese Werte beispielsweise gleich üblichen Standardwerten gesetzt, welche vorzugsweise in dem Steuergerät der Getriebeeinrichtung hinterlegt sind.

In einer bevorzugten Ausgestaltung der Erfindung ist vorgesehen, dass während eines Betriebs der Getriebeeinrichtung das Gesamtenergieniveau periodisch um zugeführte Energie inkrementiert und um abgeführte Energie dekrementiert wird. Wie bereits vorstehend erläutert, wird also während des Betriebs der Getriebeeinrichtung eine Energiebilanzierung durchgeführt. Die zugeführte Energie und die abgeführte Energie sind dabei vorzugsweise Absolutwerte, weisen also stets ein positives Vorzeichen auf. Unter bestimmten Umgebungsbedingungen können sie jedoch auch negativ sein.

Beispielsweise wird das Inkrementieren und/oder Dekrementieren des Gesamtenergieniveaus periodisch, insbesondere regelmäßig, vorgenommen. Beispielsweise entspricht die Zeitdifferenz zwischen zwei unmittelbar benachbarten Zeitpunkten, an welchen das Anpassen des Gesamtenergieniveaus vorgenommen wird, mindestens 5 Millisekunden, mindestens 10 Millisekunden, mindestens 20 Millisekunden, mindestens 30 Millisekunden, mindestens 40 Millisekunden, mindestens 50 Millisekunden, mindestens 60 Millisekunden, mindestens 70 Millisekunden oder mindestens 80 Millisekunden.

In einer besonders bevorzugten Ausgestaltung der Erfindung ist vorgesehen, dass die zugeführte Energie als Funktion eines Verlustmoments der Getriebeeinrichtung, der Drehzahl und einer Zeitdifferenz ermittelt wird. Die ermittelte Größe der zugeführten Energie beschreibt also diejenige Energie, die der Getriebeeinrichtung beziehungsweise dem Ölraum während der Zeitdifferenz zugeführt wird. Das Verlustmoment kann beispielsweise konstant gewählt werden, ist jedoch vorzugsweise von dem momentan eingelegten Gang der Getriebeeinrichtung, also der momentan vorliegenden Übersetzung, abhängig.

Die Drehzahl entspricht einer Eingangsdrehzahl der Getriebeeinrichtung, also der Drehzahl an der Antriebs- beziehungsweise Eingangswelle. Die Zeitdifferenz entspricht vorzugsweise der Differenz zwischen zwei unmittelbar aufeinanderfolgenden Zeitpunkten, zu welchen die Ermittlung der zugeführten Energie beziehungsweise das Anpassen des Gesamtenergieniveaus durchgeführt wird. Selbstverständlich kann es auch vorgesehen sein, dass die zugeführte Energie integral aus dem Verlustmoment und der Drehzahl bestimmt wird. In diesem Fall ist die Zeitdifferenz infinitesimal klein.

Die Bestimmung der zugeführten Energie kann beispielsweise mithilfe der Beziehung

$$E = M_{Verlust} \cdot n_{Eingang} / 9550 \cdot \Delta t$$

ermittelt werden. Dabei entspricht E der zugeführten Energie, $M_{Verlust}$ dem Verlustmoment, $n_{Eingang}$ der Drehzahl und $\Delta t$ der Zeitdifferenz.

In einer Weiterbildung der Erfindung ist vorgesehen, dass die zugeführte Energie als Funktion des Gesamtenergieniveaus und einer Temperatur eines benachbarten Ölraums ermittelt wird. Dies kann zusätzlich oder alternativ zu der vorstehend beschriebenen Vorgehensweise vorgesehen sein. Neben dem vorstehend bereits beschriebenen Ölraum kann insoweit der benachbarte, insbesondere der unmittelbar benachbarte, Ölraum vorliegen. Während in dem vorstehend erwähnten Ölraum der Radsatz der Getriebeeinrichtung vorliegt, kann in dem benachbarten Ölraum wenigstens eine Aktuatoreinrichtung angeordnet sein, mit welcher beispielsweise die Übersetzung der Getriebeeinrichtung einstellbar ist. Zu diesem Zweck ist der Aktuator vorzugsweise mit dem Radsatz beziehungsweise wenigstens einem der Radsätze wirkverbunden.

Auch der benachbarte Ölraum wird vorzugsweise mit Öl beziehungsweise Schmiermittel versorgt. Falls die Temperatur des benachbarten Ölraums höher ist als die des Ölraums, so wird Wärme von dem benachbarten Ölraums an den Ölraum durch Wärmeleitung übertragen. Umso größer die Differenz zwischen der Temperatur des benachbarten Ölraums und der Temperatur des Ölraums ist, umso größer ist die Energiemenge, welcher dem Ölraum aus dem benachbarten Ölraum zugeführt wird. Vorzugsweise wird sie im Rahmen der Modellierung des Gesamtenergieniveaus als Funktion des Gesamtenergieniveaus und der Temperatur des benachbarten Ölraums ermittelt. Die Temperatur wird beispielsweise mittels eines Temperatursensors festgestellt, wobei der Temperatursensor vorzugsweise in oder zumindest an dem benachbarten Ölraum vorliegt.

In einer weiteren Ausgestaltung der Erfindung ist vorgesehen, dass die abgeführte Energie als Funktion der Außentemperatur, einer Fahrgeschwindigkeit und dem Gesamtenergieniveau ermittelt wird. Je niedriger die Außentemperatur ist, umso mehr Energie wird aus dem Ölraum in Richtung der Außenumgebung abgeführt. Auch die Fahrgeschwindigkeit hat einen bedeutenden Einfluss auf die Menge der abgeführten Energie, insbesondere wird diese umso größer, je höher die Fahrgeschwindigkeit ist. Die abgeführte Energie liegt insgesamt als Funktion der Außentemperatur, der Fahrgeschwindigkeit und dem Gesamtenergieniveau vor. Die Fahrgeschwindigkeit ist insbesondere die Geschwindigkeit eines Kraftfahrzeugs, welchem die Getriebeeinrichtung zugeordnet ist. Sie wird vorzugsweise mittels eines Steuergeräts des Kraftfahrzeugs ermittelt und beispielsweise an das Steuergerät der Getriebeeinrichtung übertragen.

In einer besonders bevorzugten Ausgestaltung der Erfindung ist vorgesehen, dass zum Ermitteln der abgeführten Energie aus mehreren Ausgangskennfeldern für unterschiedliche Außentemperaturen in Abhängigkeit von der Fahrgeschwindigkeit und dem Gesamtenergieniveau Werte für eine Rohenergieentnahme entnommen werden, wobei zum Erstellen eines Rohenergiekennfelds die Werte für die Rohenergieentnahme in dem Rohenergiekennfeld über den unterschiedlichen Außentemperaturen aufgetragen werden. Es liegen also mehrere Kennfelder beziehungsweise Ausgangskennfelder vor, welche für unterschiedliche Außentemperaturen die Rohenergieentnahme in Abhängigkeit von der Fahrgeschwindigkeit und dem Gesamtenergieniveau setzen. Beispielsweise liegen Ausgangskennfelder für mindestens zwei, mindestens drei, mindestens vier, mindestens fünf oder mindestens sechs unterschiedliche Außentemperaturen vor.

Vorzugsweise sind die Außentemperaturen, für welche diese Kennfelder vorliegen, jeweils um dieselbe Temperaturdifferenz voneinander beabstandet. Beispielsweise liegen die Kennfelder für Außentemperaturen von -10 °C, 0 °C, 10 °C. 20 °C und/oder 30 °C vor. Selbstverständlich müssen jedoch nicht Kennfelder für alle der genannten Außentemperaturen vorliegen. Beispielsweise können auch lediglich Kennfelder für -10 °C, +10 °C, +20 °C und +30 °C vorliegen.

Als Eingangsgrößen der Ausgangskennfelder dienen die Fahrgeschwindigkeit und das Gesamtenergieniveau. Als Ausgangsgröße ergibt sich die Rohenergieentnahme für die jeweilige Außentemperatur. Wie bereits erläutert, wird aus den mehreren Ausgangskennfeldern, insbesondere aus allen Ausgangskennfeldern, die jeweilige Rohenergieentnahme ausgelesen. Diese Werte werden anschließend in das zu erstellende Rohenergiekennfeld eingetragen, sodass in diesem die Rohenergieentnahme über den unterschiedlichen Außentemperaturen aufgetragen ist. Insoweit werden die mehreren Ausgangskennfelder in dem zu erstellenden beziehungsweise dem erstellten Rohenergiekennfeld in Abhängigkeit von der Fahrgeschwindigkeit und dem Gesamtenergieniveau zusammengefasst.

In einer bevorzugten Ausgestaltung der Erfindung ist vorgesehen, dass nach dem Erstellen des Rohenergiekennfelds die Rohenergieentnahme aus dem Rohenergiekennfeld unter Verwendung der Außentemperatur ausgelesen wird. Die tatsächlich vorliegende Rohenergieentnahme kann insoweit schlussendlich aus dem auf die vorstehend beschriebene Art und Weise erstellten Rohenergiekennfeld ermittelt werden, wobei die momentan vorliegende Außentemperatur als Eingangsgröße zugrunde gelegt wird.

Schließlich kann in einer weiteren bevorzugten Ausgestaltung vorgesehen sein, dass die abgeführte Energie der Rohenergieentnahme entspricht oder aus der Rohenergieentnahme und einem Korrekturfaktor ermittelt wird, wobei der Korrekturfaktor aus einem Betriebszustand einer dem Ölraum fluidtechnisch zugeordneten Ölpumpe ermittelt wird. Die theoretisch aus dem Ölraum abgeführte Energie kann also unmittelbar der Rohenergieentnahme gleichgesetzt werden. Besonders bevorzugt ist jedoch zusätzlich der Korrekturfaktor vorgesehen, sodass sich die abgeführte Energie aus einer Multiplikation der Rohenergieentnahme und diesem Korrekturfaktor ergibt.

Der Korrekturfaktor kann beispielsweise wenigstens eine Betriebsgröße der Getriebeeinrichtung berücksichtigen, beispielsweise den Betriebszustand der Ölpumpe, die dem Ölraum fluidtechnisch zugeordnet ist. Darunter ist zu verstehen, dass die Ölpumpe dazu dient, dem Ölraum Schmiermittel zuzuführen beziehungsweise aus ihm abzuführen. Die Ölpumpe ist mithin Bestandteil eines Schmiermittelkreislaufs, in welchem auch der Ölraum vorliegt. Der Betriebszustand der Ölpumpe ist in einem einfachsten Fall der Aktivierungszustand, sodass der Korrekturfaktor in Abhängigkeit davon gewählt wird, ob die Ölpumpe betrieben wird oder nicht.

Es kann jedoch auch vorgesehen sein, dass der Korrekturfaktor in Abhängigkeit von der Drehzahl der Ölpumpe und/oder der Fördermenge der Ölpumpe ermittelt wird. Beispielsweise wird der Korrekturfaktor gleich einem ersten Wert gesetzt, wenn die Drehzahl der Ölpumpe kleiner oder gleich einer ersten Drehzahl ist. Ist sie dagegen größer als die erste Drehzahl, so wird der Korrekturfaktor gleich einem zweiten Wert gesetzt. Vorzugsweise ist dabei der zweite Wert von dem ersten Wert verschieden.

Selbstverständlich kann es auch vorgesehen sein, dass der Korrekturfaktor mithilfe einer mathematischen Beziehung aus der Drehzahl ermittelt wird, wobei beispielsweise ein linearer Zusammenhang zwischen dem Korrekturfaktor und der Drehzahl vorgesehen ist. Insoweit ist beispielsweise der Korrekturfaktor proportional zu der Drehzahl. Allerdings kann selbstverständlich auch der Korrekturfaktor überproportional oder unterproportional zu der Drehzahl sein.

Die Erfindung betrifft weiterhin eine Getriebeeinrichtung zur Durchführung des Verfahrens gemäß den vorstehenden Ausführungen, wobei die Getriebeeinrichtung mindestens einen Ölraum aufweist, in welchem ein Radsatz der Getriebeeinrichtung angeordnet ist. Dabei ist vorgesehen, dass die Getriebeeinrichtung dazu ausgebildet ist, zum Ermitteln der Temperatur in dem Ölraum ein Gesamtenergieniveau für den Ölraum zu ermitteln, wobei ein Initialwert für das Gesamtenergieniveau bei einem Betriebsstart der Getriebeeinrichtung mit den folgenden Schritten bestimmt wird: Ermitteln einer normierten Abstellzeit als Funktion einer Außentemperatur sowie des Gesamtenergieniveaus, die bei einem dem Betriebsstart vorhergehenden Abstellen der Getriebeeinrichtung vorlagen, wobei die normierte Abstellzeit der Zeitspanne entspricht, nach deren Ablauf nach dem Abstellen die Temperatur des Ölraums sich der Außentemperatur angeglichen hat; Ermitteln einer korrigierten Abstellzeit als Funktion der normierten Abstellzeit und einer gemessenen Abstellzeit, wobei die gemessene Abstellzeit der mittels eines Zeitnehmers gemessenen Zeitspanne von dem Abstellen bis zu dem Betriebsstart entspricht; und Ermitteln des Initialwerts als Funktion der korrigierten Abstellzeit und der momentanen Außentemperatur.

Auf die Vorteile einer derartigen Vorgehensweise und einer derartigen Ausgestaltung der Getriebeeinrichtung wurde bereits eingegangen. Sowohl die Getriebeeinrichtung als auch das Verfahren können gemäß den vorstehenden Ausführungen weitergebildet sein, sodass insoweit auf diese verwiesen wird. Beispielsweise verfügt die Getriebeeinrichtung über ein Steuergerät, welches zum Ermitteln des Gesamtenergieniveaus für den Ölraum vorgesehen ist.

Die Erfindung betrifft selbstverständlich auch ein Kraftfahrzeug mit einer Getriebeeinrichtung gemäß den vorstehenden Ausführungen.

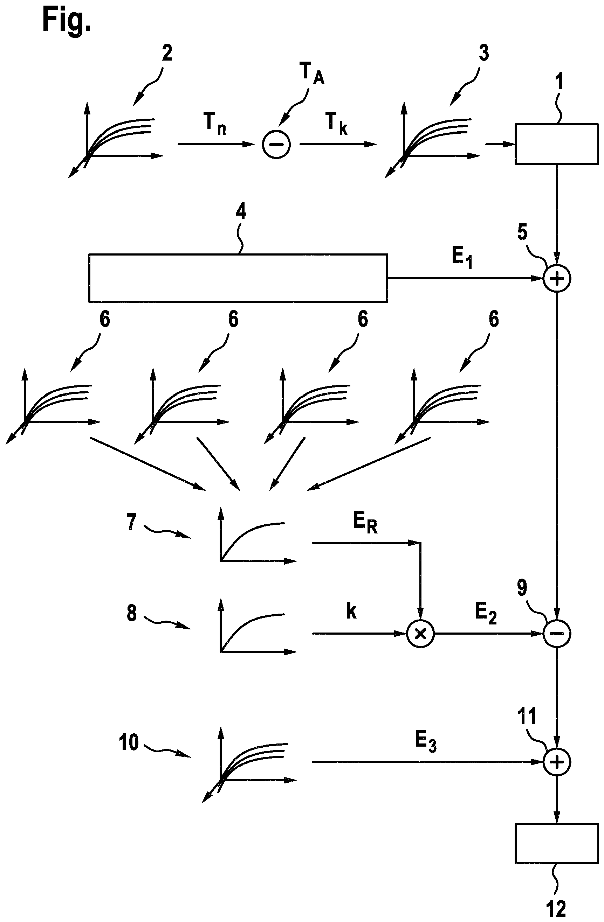

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur        ein Ablaufdiagramm für ein Verfahren zum Betreiben einer Getriebeeinrichtung, insbesondere zum Ermitteln eines Gesamtenergieniveaus für einen Ölraum der Getriebeeinrichtung.

Die Figur zeigt ein Ablaufdiagramm, in welchem ein Verfahren zum Betreiben einer Getriebeeinrichtung dargestellt ist. Die Getriebeeinrichtung ist vorzugsweise eine Schaltgetriebeeinrichtung, insbesondere eine automatische Schaltgetriebeeinrichtung. Die Getriebeeinrichtung ist bevorzugt Bestandteil eines Kraftfahrzeugs, genauer gesagt eines Antriebsstrangs des Kraftfahrzeugs. Die Getriebeeinrichtung ist insoweit einerseits mit einer Antriebseinrichtung des Kraftfahrzeugs wirkverbunden beziehungsweise wirkverbindbar und andererseits mit wenigstens einer angetriebenen Achse des Kraftfahrzeugs.

Die Getriebeeinrichtung weist einen Ölraum auf, in welchem ein Radsatz der Getriebeeinrichtung angeordnet ist. Der Radsatz weist mindestens ein Zahnradgetriebe, beispielsweise ein Stirnradgetriebe, Kegelradgetriebe und/oder Planetenradgetriebe auf. Insbesondere verfügt der Radsatz über mehrere derartige Zahnradgetriebe. Neben dem Ölraum ist vorzugsweise ein weiterer Ölraum vorgesehen, welcher benachbart zu dem Ölraum angeordnet ist. In diesem benachbarten Ölraum ist beispielsweise wenigstens ein Aktuator angeordnet, welcher insbesondere dem Einstellen einer gewünschten Übersetzung an der Getriebeeinrichtung dient. Zu diesem Zweck ist der Aktuator beispielsweise mit dem Radsatz der Getriebeeinrichtung wirkverbunden.

Sowohl der Ölraum als auch der benachbarte Ölraum werden mit Schmiermittel beziehungsweise Öl versorgt. Zu diesem Zweck weist der Ölraum vorzugsweise eine Trockensumpfschmierung auf. Dies kann ebenso für den benachbarten Ölraum der Fall sein.

Um die Temperatur in dem Ölraum zu ermitteln, ist es nun vorgesehen, ein Gesamtenergieniveau für den Ölraum zu ermitteln. Zu diesem Zweck dient das anhand des Ablaufdiagramms beschriebenen Verfahrens. Im Rahmen eines Schritts 1 wird das zu ermittelnde Gesamtenergieniveau zunächst entweder gleich einem gespeicherten Gesamtenergieniveau oder - falls das Ermitteln unmittelbar auf den Betriebsstart der Getriebeeinrichtung folgt - gleich einem Initialwert für das Gesamtenergieniveau gesetzt.

Der Initialwert wird wie folgt bestimmt: Zunächst wird anhand eines Kennfelds 2 eine normierte Abstellzeit bestimmt. Als Eingangsgrößen für das Kennfeld 2 werden dabei eine Außentemperatur sowie das Gesamtenergieniveau verwendet, die bei einem unmittelbar vorhergehenden Abstellen der Getriebeeinrichtung vorlagen. Aus dem Kennfeld 2 ergibt sich die normierte Abstellzeit $T_n$. Von dieser wird eine gemessene Abstellzeit $T_A$ abgezogen, sodass sich als Ergebnis eine korrigierte Abstellzeit $T_k$ ergibt. Diese wird wiederum neben der momentanen Außentemperatur als Eingangsgröße für ein Kennfeld 3 herangezogen. Aus diesem ergibt sich der Initialwert für das gesamte Energieniveau. Wie bereits erläutert, wird bei dem Betriebsstart das gesamte Energieniveau gleich dem Initialwert gesetzt, sobald dieses ermittelt wurde.

Während des Betriebs der Getriebeeinrichtung wird das Gesamtenergieniveau ausgehend von dem während des Schritts 1 festgelegten Wert um zugeführte Energie inkrementiert und um abgeführte Energie dekrementiert. Erstere wird zumindest teilweise im Rahmen eines Schritts 4 ermittelt, wobei sich die zugeführte Energie aus einer Funktion ergibt, die als Eingangsgrößen ein Verlustmoment der Getriebeeinrichtung, der Drehzahl und einer Zeitdifferenz aufweist. Beispielsweise wird dabei die Beziehung

$$E_1 = M_{Verlust} \cdot n_{Eingang} / 9550 \cdot \Delta t$$

zugrunde gelegt. Dabei beschreibt $E_1$ die zugeführte Energie, $M_{Verlust}$ das Verlustmoment der Getriebeeinrichtung, $n_{Eingang}$ die Eingangsdrehzahl sowie $\Delta t$ die Zeitdifferenz zwischen zwei unmittelbar aufeinanderfolgenden Zeitpunkten, zu welchen die zugeführte Energie bestimmt beziehungsweise das Gesamtenergieniveau aktualisiert wird.

Die zugeführte Energie $E_1$ wird im Rahmen eines Schritts 5 dem Gesamtenergieniveau zugeschlagen. Anschließend wird die abgeführte Energie E2 ermittelt. Zu diesem Zweck sind mehrere Ausgangskennfelder 6 vorgesehen, welche jeweils für unterschiedliche Außentemperaturen eine Rohenergieentnahme in Bezug zu einer Fahrgeschwindigkeit und dem Gesamtenergieniveau setzen. Aus jedem Ausgangskennfeld 6 wird insoweit ein Wert für die Rohenergieentnahme ausgelesen, wobei dies in Abhängigkeit von der Fahrgeschwindigkeit und dem Gesamtenergieniveau erfolgt. Die aus den Ausgangskennfeldern 6 ausgelesene Werte werden nachfolgend in ein Rohenergiekennfeld 7 in Abhängigkeit von den unterschiedlichen Außentemperaturen aufgetragen. Aus jedem Ausgangskennfeld 6 folgt also für eine bestimmte Außentemperatur ein bestimmter Wert für die Rohenergieentnahme.

In dem Rohenergiekennfeld 7 wird nun jeder dieser Werte für die Rohenergieentnahme über dem jeweiligen Wert der Außentemperatur aufgetragen. Nach dem Erstellen des Rohenergiekennfelds 7 wird anschließend die Rohenergieentnahme $E_R$ aus dem Rohenergiekennfeld 7 ausgelesen, wobei die momentane Außentemperatur als Eingangsgröße dient. Zudem wird ein Korrekturfaktor k ermittelt, beispielsweise mittels eines weiteren Kennfelds 8. Beispielsweise wird bei dem Auslesen aus dem Rohenergiekennfeld 7 und/oder dem weiteren Kennfeld 8 linear interpoliert. Die abgeführte Energie $E_2$ ergibt sich nun aus einer Multiplikation der Rohenergieentnahme $E_R$ und dem Korrekturfaktor k, sodass insgesamt gilt

$$E_2 = E_R \cdot k.$$

Der Korrekturfaktor k kann aus einem Betriebszustand einer dem Ölraum fluidtechnisch zugeordneten Ölpumpe ermittelt werden. Beispielsweise steht der Korrekturfaktor in Beziehung zu der Drehzahl der Ölpumpe. Die so ermittelte abgeführte Energie $E_2$ wird im Rahmen eines Schritts 9 von dem Gesamtenergieniveau abgezogen.

Schließlich wird ein weiterer Teil der zugeführten Energie, welcher hier als $E_3$ bezeichnet wird, aus dem Gesamtenergieniveau und einer Temperatur des benachbarten Ölraums ermittelt. Zu diesem Zweck dient beispielsweise ein Kennfeld 10. Die zugeführte Energie $E_3$ wird im Rahmen eines Schritts 11 wiederum dem Gesamtenergieniveau zugeführt. Sofern im Rahmen der vorliegenden Beschreibung auf die Verwendung des Gesamtenergieniveaus als Eingangsgröße eingegangen wird, so ist damit stets derjenige Wert des Gesamtenergieniveaus gemeint, welcher während des Schritts 1 beziehungsweise unmittelbar nach dem Schritt 1 vorliegt.

Mit der genannten Vorgehensweise ergibt sich in einem Schritt 12 ein neuer Wert für das Gesamtenergieniveau, welcher abgespeichert wird. Anschließend wird die hier beschriebene Vorgehensweise periodisch wiederholt, sodass also beispielsweise nach einer bestimmten Zeitspannte erneut zu dem Schritt 1 verzweigt wird. Weil während des Betriebs der Getriebeeinrichtung nun jedoch bereits ein Wert für das Gesamtenergieniveau vorliegt, muss das Ermittelt des Initialwerts nicht erneut durchgeführt werden, sodass im Rahmen des Schritts 1 das Gesamtenergieniveau dem im Rahmen des Schritts 12 vorliegenden Gesamtenergieniveau gesetzt wird.

Bei einem Abstellen der Getriebeeinrichtung beziehungsweise bei einem Betriebsende werden das Gesamtenergieniveau und die aktuelle Temperatur gespeichert, insbesondere in einem Steuergerät der Getriebeeinrichtung.

Mithilfe der vorstehend beschriebenen Vorgehensweise ist ein kostengünstiges und zuverlässiges Verfahren zum Ermitteln der Temperatur in dem Ölraum umgesetzt. Insbesondere wird eine Möglichkeit beschrieben, auch Standzeiten der Getriebeeinrichtung, in während welchen also kein Betrieb durchgeführt wird, zu überbrücken und dennoch eine genaue Abschätzung des für das Ermitteln der Temperatur notwendigen Gesamtenergieniveaus durchführen zu können.

**Patentansprüche**

1. Verfahren zum Ermitteln der Temperatur in einem Ölraum einer Getriebeeinrichtung, wobei in dem Ölraum ein Radsatz der Getriebeeinrichtung angeordnet ist, **dadurch gekennzeichnet, dass** zum Ermitteln der Temperatur in dem Ölraum ein Gesamtergieniveau für den Ölraum ermittelt wird, wobei ein Initialwert für das Gesamtenergieniveau bei einem Betriebsstart der Getriebeeinrichtung mit den folgenden Schritten bestimmt wird:

   - Ermitteln einer normierten Abstellzeit als Funktion einer Außentemperatur sowie des Gesamtenergieniveaus, die bei einem dem Betriebsstart vorhergehenden Abstellen der Getriebeeinrichtung vorlagen, wobei die normierte Abstellzeit der Zeitspanne entspricht, nach deren Ablauf nach dem Abstellen die Temperatur des Ölraums sich der Außentemperatur angeglichen hat,
   - Ermitteln einer korrigierten Abstellzeit als Funktion der normierten Abstellzeit und einer gemessenen Abstellzeit, wobei die gemessene Abstellzeit der mittels eines Zeitnehmers gemessenen Zeitspanne von dem Abstellen bis zu dem Betriebsstart entspricht, und
   - Ermitteln des Initialwerts als Funktion der korrigierten Abstellzeit und der momentanen Außentemperatur.

2. Verfahren nach Anspruch 1, **dadurch gekennzeichnet, dass** bei dem Betriebsstart das Gesamtenergieniveau gleich dem Initialwert gesetzt wird.

3. Verfahren nach einem der vorhergehenden Ansprüche, **dadurch gekennzeichnet, dass** während eines Betriebs der Getriebeeinrichtung das Gesamtenergieniveau periodisch um zugeführte Energie inkrementiert und um abgeführte Energie dekrementiert wird.

4. Verfahren nach Anspruch 3, **dadurch gekennzeichnet, dass** die zugeführte Energie als Funktion eines Verlustmoments der Getriebeeinrichtung, der Drehzahl und einer Zeitdifferenz ermittelt wird.

5. Verfahren nach Anspruch 3, **dadurch gekennzeichnet, dass** die zugeführte Energie als Funktion des Gesamtenergieniveaus und einer Temperatur eines benachbarten Ölraums ermittelt wird.

6. Verfahren nach nach Anspruch 3, **dadurch gekennzeichnet, dass** die abgeführte Energie als Funktion der Außentemperatur, einer Fahrgeschwindigkeit und dem Gesamtenergieniveau ermittelt wird.

7. Verfahren nach einem der Ansprüche 3 bis 6, **dadurch gekennzeichnet, dass** zum Ermitteln der abgeführten Energie aus mehreren Ausgangskennfeldern für unterschiedliche Außentemperaturen in Abhängigkeit von der Fahrgeschwindigkeit und dem Gesamtenergieniveau Werte für eine Rohenergieentnahme entnommen werden, wobei zum Erstellen eines Rohenergiekennfelds die Werte für die Rohenergieentnahme in dem Rohenergiekennfeld über den unterschiedlichen Außentemperaturen aufgetragen werden.

8. Verfahren nach Anspruch 7, **dadurch gekennzeichnet, dass** nach dem Erstellen des Rohenergiekennfelds die Rohenergieentnahme aus dem Rohenergiekennfeld unter Verwendung der Außentemperatur ausgelesen wird.

**9.** Verfahren nach einem Ansprüche 7 und 8, **dadurch gekennzeichnet, dass** die abgeführte Energie der Rohenergieentnahme entspricht oder aus der Rohenergieentnahme und einem Korrekturfaktor ermittelt wird, wobei der Korrekturfaktor aus einem Betriebszustand einer dem Ölraum fluidtechnisch zugeordneten Ölpumpe ermittelt wird.

**10.** Getriebeeinrichtung zur Durchführung des Verfahrens nach einem der vorhergehenden Ansprüche, wobei die Getriebeeinrichtung mindestens einen Ölraum aufweist, in welchem ein Radsatz der Getriebeeinrichtung angeordnet ist, **dadurch gekennzeichnet, dass** die Getriebeeinrichtung dazu ausgebildet ist, zum Ermitteln der Temperatur in dem Ölraum ein Gesamtenergieniveau für den Ölraum zu ermitteln, wobei ein Initialwert für das Gesamtenergieniveau bei einem Betriebsstart der Getriebeeinrichtung mit den folgenden Schritten bestimmt wird:

- Ermitteln einer normierten Abstellzeit als Funktion einer Außentemperatur sowie des Gesamtenergieniveaus, die bei einem dem Betriebsstart vorhergehenden Abstellen der Getriebeeinrichtung vorlagen, wobei die normierte Abstellzeit der Zeitspanne entspricht, nach deren Ablauf nach dem Abstellen die Temperatur des Ölraums sich der Außentemperatur angeglichen hat,
- Ermitteln einer korrigierten Abstellzeit als Funktion der normierten Abstellzeit und einer gemessenen Abstellzeit, wobei die gemessene Abstellzeit der mittels eines Zeitnehmers gemessenen Zeitspanne von dem Abstellen bis zu dem Betriebsstart entspricht, und
- Ermitteln des Initialwerts als Funktion der korrigierten Abstellzeit und der momentanen Außentemperatur.

**Claims**

**1.** Method for determining the temperature in an oil chamber of a transmission device, wherein in the oil chamber is disposed a gear set of the transmission device, **characterised in that** for determining the temperature in the oil chamber an overall energy level is determined for the oil chamber, wherein an initial value for the overall energy level at an operation start of the transmission device is determined with the following steps:

- determining a normed shut-off time as function of an outside temperature and of the overall energy level which exist when the transmission device is shut-off prior to operation start, wherein the normed shut-off time is equal to the time duration after which after shut-off the temperature of the oil chamber has reached the outside temperature,
- determining a corrected shut-off time as function of the normed shut-off time and of a measured shut-off time, wherein the measured shut-off time is equal to the time duration measured by means of a timer from the shut-off until the operation start, and
- determining the initial value as function of the corrected shut-off time and of the current outside temperature.

**2.** Method according to claim 1, **characterised in that** at operation start the overall energy level is set equal to the initial value.

**3.** Method according to one of the preceding claims, **characterised in that** during an operation of the transmission device the overall energy level is incremented periodically by supplied energy and decremented by dissipated energy.

**4.** Method according to claim 3, **characterised in that** the supplied energy is determined as function of a loss torque of the transmission device, the engine speed and a time difference.

**5.** Method according to claim 3, **characterised in that** the supplied energy is determined as function of the overall energy level and a temperature of an abutting oil chamber.

**6.** Method according to claim 3, **characterised in that** the dissipated energy is determined as function of the outside temperature, a driving speed and the overall energy level.

**7.** Method according to one of claims 3 to 6, **characterised in that** for determining the dissipated energy out of a plurality of output characteristic maps for different outside temperatures depending on the driving speed and the overall energy level, values are extracted for a raw energy extraction, wherein for generating a raw energy characteristic map the values for the raw energy extraction in the raw energy characteristic map are applied over the various outer temperatures.

**8.** Method according to claim 7, **characterised in that** after the generation of the raw energy characteristic map the raw energy extraction is read out of the raw energy characteristic map by using the outer temperature.

**9.** Method according to one claims 7 and 8, **characterised in that** the dissipated energy is equal to the raw energy extraction or is determined from the raw energy extraction and a correcting factor, wherein the correcting factor is determined from an operation state of an oil pump which is fluidically associated with the oil chamber.

10. Transmission device for carrying out the method according to one of the preceding claims, wherein the transmission device has at least one oil chamber in which is disposed a gear set of the transmission device, **characterised in that** the transmission device is designed for determining the temperature in the oil chamber to determine an overall energy level in the oil chamber, wherein an initial value for the overall energy level at an operation start of the transmission device is determined with the following steps:

- determining a normed shut-off time as function of an outside temperature and of the overall energy level, which exist when the transmission device is shut-off prior to operation start, wherein the normed shut-off time is equal to the time duration after which, after shut-off, the temperature of the oil chamber has reached the outside temperature,
- determining a corrected shut-off time as function of the normed shut-off time and of a measured shut-off time, wherein the measured shut-off time is equal to the time duration measured by means of a timer from the shut-off until the operation start, and
- determining the initial value as function of the corrected shut-off time and of the current outside temperature.

**Revendications**

1. Procédé de détermination de la température dans un réservoir d'huile d'un dispositif de transmission, dans lequel un jeu de roues du dispositif de transmission est agencé dans le réservoir d'huile, **caractérisé en ce qu'**un niveau d'énergie total pour le réservoir d'huile est déterminé pour la détermination de la température dans le réservoir d'huile, dans lequel une valeur initiale est établie pour le niveau d'énergie total lors d'un démarrage de fonctionnement du dispositif de transmission avec les étapes suivantes :

- la détermination d'un temps d'arrêt normalisé en fonction d'une température extérieure ainsi que du niveau d'énergie total qui se présentent lors d'un arrêt précédant le démarrage de fonctionnement du dispositif de transmission, dans lequel le temps d'arrêt normalisé correspond à l'intervalle après l'expiration duquel après l'arrêt la température du réservoir d'huile s'est ajustée à la température extérieure,

- la détermination d'un temps d'arrêt corrigé en fonction du temps d'arrêt normalisé et d'un temps d'arrêt mesuré, dans lequel le temps d'arrêt mesuré correspond à l'intervalle mesuré au moyen d'un chronomètre de l'arrêt jusqu'au démarrage du fonctionnement, et
- la détermination de la valeur initiale en fonction du temps d'arrêt corrigé et de la température extérieure momentanée.

2. Procédé selon la revendication 1, **caractérisé en ce que** lors du démarrage de fonctionnement le niveau d'énergie total est défini de manière identique à la valeur initiale.

3. Procédé selon l'un quelconque des revendications précédentes, **caractérisé en ce que** pendant un fonctionnement du dispositif de transmission le niveau d'énergie total est incrémenté périodiquement de l'énergie alimentée et décrémenté de l'énergie évacuée.

4. Procédé selon la revendication 3, **caractérisé en ce que** l'énergie alimentée est déterminée en fonction d'un moment de perte du dispositif de transmission, de la vitesse de rotation et d'une différence de temps.

5. Procédé selon la revendication 3, **caractérisé en ce que** l'énergie alimentée est déterminée en fonction du niveau d'énergie total et d'une température d'un réservoir d'huile contigu. -

6. Procédé selon la revendication 3, **caractérisé en ce que** l'énergie évacuée est déterminée en fonction de la température extérieure, d'une vitesse de déplacement et du niveau d'énergie total.

7. Procédé selon l'une quelconque des revendications 3 à 6, **caractérisé en ce que** des valeurs pour un prélèvement d'énergie brute sont prélevées pour la détermination de l'énergie évacuée à partir de plusieurs champs caractéristiques de sortie pour différentes températures extérieures en fonction de la vitesse de déplacement et du niveau d'énergie total, dans lequel pour l'établissement d'un champ caractéristique d'énergie brute les valeurs pour le prélèvement d'énergie brute sont appliquées dans le champ caractéristique d'énergie brute au-dessus des différentes températures extérieures.

8. Procédé selon la revendication 7, **caractérisé en ce qu'**après l'établissement du champ caractéristique d'énergie brute le prélèvement d'énergie brute à partir du champ caractéristique d'énergie brute est lu en utilisant la température extérieure.

9. Procédé selon une revendications 7 et 8, **caractérisé en ce que** l'énergie évacuée correspond au prélèvement d'énergie brute ou est déterminée à partir du prélèvement d'énergie brute et d'un facteur de correction, dans lequel le facteur de correction est déterminé à partir d'un état de fonctionnement d'une pompe à huile associé fluidiquement au réservoir d'huile.

**10.** Dispositif de transmission pour la réalisation du procédé selon l'une quelconque des revendications précédentes, dans lequel le dispositif de transmission présente au moins un réservoir d'huile, dans lequel un jeu de roues du dispositif de transmission est agencé, **caractérisé en ce que** le dispositif de transmission est réalisé afin de déterminer pour la détermination de la température dans le réservoir d'huile un niveau d'énergie total pour le réservoir d'huile, dans lequel une valeur initiale pour le niveau d'énergie total est établie lors d'un démarrage de fonctionnement du dispositif de transmission avec les étapes suivantes :

> - la détermination d'un temps d'arrêt normalisé en fonction d'une température extérieure ainsi que du niveau d'énergie total qui se présentent lors d'un arrêt précédant le démarrage de fonctionnement du dispositif de transmission, dans lequel le temps d'arrêt normalisé correspondant à l'intervalle après l'expiration duquel après l'arrêt la température de l'espace d'huile s'est ajustée à la température extérieure,
> - la détermination d'un temps d'arrêt corrigé en fonction du temps d'arrêt normalisé et d'un temps d'arrêt mesuré, dans lequel le temps d'arrêt mesuré correspond à l'intervalle mesuré au moyen d'un chronomètre de l'arrêt jusqu'au démarrage de fonctionnement, et
> - la détermination de la valeur initiale en fonction du temps d'arrêt corrigé et de la température extérieure momentanée.

**Fig.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10043423
- DE 3108242 A1